# EUROPÄISCHE PATENTSCHRIFT

(11) **EP 1 808 348 B1**
(45) Veröffentlichungstag und Bekanntmachung des Hinweises auf die Patenterteilung: **02.12.2009**
(21) Anmeldenummer: 07000388.4
(22) Anmeldetag: 10.01.2007
(51) Int. Cl.: B60T 13/66

(54) **Verschliessarme und genaue Druckregelung mit Schaltventilen zur Bremsdruckregelung in Schienenfahrzeugen**
Locking arms and exact pressure regulation with control valves for regulating brake pressure in rail vehicles
Réglage de pression précise et sans usure à l'aide de soupapes de commande destinées au réglage de la pression des freins dans des véhicules sur rails

(30) Priorität: 12.01.2006 DE 102006001551
(43) Veröffentlichungstag der Anmeldung: 18.07.2007
(73) Patentinhaber: KNORR-BREMSE Systeme für Schienenfahrzeuge GmbH, 80809 München (DE)
(72) Erfinder: Furtwängler, Ralf, 80689 München (DE)
(74) Vertreter: Schönmann, Kurt

(56) Entgegenhaltungen:
- EP-A2- 0 037 565
- EP-A2- 0 937 617
- DE-A1- 3 005 136
- DE-A1- 3 505 898
- DE-A1- 4 438 017

## Beschreibung

Die Erfindung betrifft ein Verfahren und ein System zur Bremsdruckregelung in Schienenfahrzeugen, und bezieht sich insbesondere auf ein Verfahren und ein System zur verschleißarmen und genauen Druckregelung mit Schaltventilen zur Bremsdruckregelung in Schienenfahrzeugen nach der Gattung der Patentansprüche 1 und 8.

DE 3505898 offenbart als nächstliegende Stand der Technik ein Bremssystem für Schienenfahrzeugen mit ein Führerbremsventile für selbsttätige, indirekt wirkende Druckluftbremsen.

In neueren Schienenfahrzeugen kommen unter anderem direkt oder indirekt wirkende elektropneumatische Bremsen zum Einsatz, bei welchen aus einem Reservoirdruck über Vorsteuerventile, beispielsweise elektrischen Brems- und Lösemagnetventilen, ein Vorsteuerdruck für ein in Abhängigkeit von diesem Vorsteuerdruck einen Hauptleitungsdruck ansteuerndes Relaisventil erzeugt und eine Bremsung ausgehend von einem Regelbetriebsdruck von ca. 5 x 10⁵ Pa durch Druckabfall in der Hauptluftleitung und das Aufheben der Bremswirkung durch eine Regelung des so erhaltenen Drucks erzielt wird.

Zur Erzeugung des Vorsteuerdrucks für das Relaisventil ist die Verwendung von in analoger Bauweise als Analog- oder Proportionalventile ausgeführten oder von als zwischen einzelnen Zuständen schaltend ausgeführten Steuerventilen bekannt.

Aufgrund der während des Betriebs der Anlage auftretenden Regelvorgänge unterliegen solche Steuerventile Verschleiß, Alterungsprozessen, usw., wodurch Wartungsintervalle verkürzt und ihre Lebensdauer insgesamt begrenzt werden.

Bei der Verwendung von Analogventilen stellen Verschleiß und Alterung nicht das Hauptproblem dar, da diese günstigenfalls mit konstanter Bestromung zur Erzeugung benötigter Druckrampen beaufschlagt werden und in diesem Fall mit minimalem Verschleiß arbeiten können. Analogventile sind jedoch im Vergleich zu Schaltventilen relativ aufwendig gebaut und deshalb teuer.

Bei als schaltende Ventile bzw. Schaltventile ausgeführten Steuer- bzw. Regelventilen hingegen werden die Lebensdauer und die erforderliche Wartungshäufigkeit maßgeblich von der Anzahl der durchgeführten Schaltvorgänge bzw. Schaltspiele bestimmt. Bei herkömmlichen Lösungen werden zum Auslösen solcher Schaltspiele lineare Regler mit statischem Toleranzband verwendet. Liegt die Regelabweichung der mit diesen Lösungen durchgeführten Druckregelung außerhalb des statischen Toleranzbands, wird das Ventil für eine gewisse Zeit geschaltet.

Aufgrund von in dem geregelten System immanent vorhandenen Nichtlinearitäten, wie sie beispielsweise durch pneumatische Prozesse in einzelnen, aufgrund ihres Wirkprinzips nichtlinearen Ventilen hervorgerufen werden, kann die durch das nachgeschaltete Relaisventil erhaltene Verstärkung nur so groß gewählt werden, dass über den gesamten Arbeitsbereich der Druckregelung eine ausreichende Stabilitätsreserve verbleibt. Dies führt in Arbeitspunkten mit niedriger Gesamtverstärkung zu einer erhöhten Schaltspielzahl und damit zu erhöhtem Ventilverschleiß.

Darüber hinaus wirken sich thermische Effekte zusätzlich vor allem bei sprungförmigen Sollwertverläufen negativ auf die Schaltspielzahl aus.

Bei der Beaufschlagung des Schaltventils mit einem rampenförmigen Druckverlauf lässt sich zudem die Stufigkeit des resultierenden Druckverlaufs nicht direkt beeinflussen und ist daher häufig kleiner als erforderlich. Demzufolge resultiert für derartige Sollwertverläufe eine relativ hohe Schaltspielzahl, die ebenfalls lediglich zu einer höheren Belastung des Schaltventils führt, ohne jedoch den resultierenden Steuer- bzw. Regeldruckverlauf merklich zu verbessern.

Der Erfindung liegt daher die Aufgabe zugrunde, ein Verfahren und ein System zur verschleißarmen und gleichzeitig hinreichend genauen Druckregelung unter Verwendung von Schaltventilen zur Bremsdruckregelung in Schienenfahrzeugen bereitzustellen, welche bei typischen Bremskraftverläufen weniger Schaltspiele der Schaltventile erfordern.

Erfindungsgemäß wird diese Aufgabe durch die Merkmale der Patentansprüche 1 und 8 gelöst.

Vorteilhafte Weiterbildungen der Erfindung sind Gegenstand der beigefügten Unteransprüche.

Der Erfindung liegt der Gedanke zugrunde, ein Regelungsverfahren anzuwenden, das bei typischen Bremskraftverläufen zu einem verschleißarmen Betriebsablauf führt, d.h. möglichst wenig Schaltspiele verursacht, und somit zu einer höheren Lebensdauer der Schaltventile führt. Hierdurch wird insbesondere der hohen Betriebsdauer und den langen Wartungszyklen bei Schienenfahrzeugen Rechnung getragen und auch bei Verwendung preiswerter Schaltventile eine hinreichend lange Lebensdauer bei gleichzeitig den im Schienenverkehr üblichen und akzeptierten Wartungsintervallen ermöglicht.

Bei dem zugrunde liegenden System handelt es sich im wesentlichen um eine pneumatische Regelstrecke zur Bremsdruckvorsteuerung (Cv-Druck-Regelung) in Schienenfahrzeugen. Als Stellglieder werden herkömmliche Schaltventile verwendet, wobei je ein Ventil zum Druckaufbau bzw. Druckabbau dient. Das zu regelnde Volumen ist variabel. Kleine Volumenänderungen treten durch die Rückwirkung des Relaisventils auf, größere durch Verwendung weiterer absperrender Ventile im Regelkreis.

Im Einzelnen umfasst das vorgeschlagene Verfahren zur Bremsdruckregelung in einer mit Schaltventilen arbeitenden elektropneumatischen Bremsanlage die folgenden Schritte:
Prüfen, ob eine Regelabweichung zwischen einem Sollwert und einem zurück gekoppelten Schaltsteuerdruck von Schaltventilen, welcher einen Istwert darstellt, einen um diesen Sollwert liegenden Totbereich einer Regeleinrichtung überschreitet;
Ausgeben einer erforderlichen Stellgröße von Null, wenn die Regelabweichung den Totbereich der Regeleinrichtung nicht überschreitet;
Aufsummieren von Regelabweichungen, die den Totbereich der Regeleinrichtung überschreiten, bis ein vorbestimmter Schwellenwert überschritten wird, und sodann Ausgeben einer erforderlichen Stellgröße ungleich Null zum Erzielen einer erforderlichen Druckänderung;
Berechnen von zum Erzielen der erforderlichen Druckänderung erforderlichen Aktivierungszeiten der Schaltventile mittels einer Nichtlinearitäts-Kompensationseinrichtung zur Linearisierung der Regelstrecke in Abhängigkeit von der erforderlichen Druckänderung und einem Versorgungsdruck der Bremsanlage;
Berechnen von tatsächlichen Ansteuerzeiten der Schaltventile mittels einer Ventilsteuereinrichtung für jeweils jedes anzusteuernde Schaltventil unter Verwendung einer inversen Ansteuerkennlinie; und
Ausgeben der tatsächlichen Ansteuerzeiten an jeweilige Endstufen zur Erzeugung von Ansteuerimpulsen für jedes der einzelnen Schaltventile.

Bevorzugt wird hierbei in Abhängigkeit von dem Aufsummierschritt die Regeleinrichtung bei großen Regelabweichungen schnell aktiviert und bei kleinen Regelabweichungen verlangsamt aktiviert. Durch diese Maßnahme wird bei dynamischen Sollwertänderungen eine gewollte Stufung erzeugt, welche die Zahl der Schaltspiele deutlich reduziert, ohne dass hierdurch Auswirkungen auf die Fahrzeugverzögerung spürbar werden, wobei andererseits in einem quasi-stationären Fall weiterhin eine sehr kleine Stufung und damit eine entsprechend hohe stationäre Genauigkeit möglich ist.

In einer vorteilhaften Ausführungsform der Erfindung werden der Schaltsteuerdruck der Schaltventile einer Temperatureffekt-Kompensationseinrichtung zur Kompensation thermodynamischer Effekte zugeführt, wird in dieser eine aufgrund der thermodynamischen Effekte zu erwartende Druckänderung berechnet, wird sodann die zu erwartende Druckänderung als temperaturabhängige Stellgröße der Regeleinrichtung zugeführt, und wird dort die temperaturabhängige Stellgröße von dem Sollwert und dem Totbereich der Regeleinrichtung derart subtrahiert, dass in Abhängigkeit von dem Vorzeichen der Stellgröße ein dynamischer Totbereich der Regeleinrichtung mit hystereseförmigem Verlauf resultiert, wobei eine negative temperaturabhängige Stellgröße derart von dem Sollwert und einem unteren Grenzwert des Totbereichs subtrahiert wird, dass der über dem Sollwert liegende Teil des Totbereichs erweitert wird, und eine positive temperaturabhängige Stellgröße derart von dem Sollwert und einem oberen Grenzwert des Totbereichs subtrahiert wird, dass der unter dem Sollwert liegende Teil des Totbereichs erweitert wird.

Durch den hystereseförmigen Sollwert- und Totbereichverlauf ergibt sich eine verringerte Schaltspielzahl bei insbesondere sprungförmigen Sollwertänderungen.

In einer weiter vorteilhaften Ausführungsform der Erfindung werden die erforderliche Stellgröße der Regeleinrichtung und die von den Ventilsteuereinrichtungen berechneten tatsächlichen Ansteuerzeiten einer Adaptionseinrichtung zugeführt, werden in dieser Korrekturterme für die Nichtlinearitäts-Kompensationseinrichtung und die Ventilsteuereinrichtungen unter Berücksichtigung von tatsächlichen Parametern des realen Systems berechnet, und werden die Korrekturterme an die Nichtlinearitäts-Kompensationseinrichtung und die Ventilsteuereinrichtungen ausgegeben.

Durch die Adaption entsteht ein deutlich robusteres Regelverhalten, und durch die weitgehende Kompensation von Toleranzen und Parameterschwankungen sind höhere Verstärkungen und somit auch höhere Genauigkeiten und weniger Schaltspiele erzielbar.

Bevorzugt wird als Regeleinrichtung ein proportionaler PID-Regler verwendet.

Das vorgeschlagene System zur Bremsdruckregelung in einer mit Schaltventilen arbeitenden elektropneumatischen Bremsanlage weist
eine Regeleinrichtung, die auf der Grundlage einer aus einem Sollwert und einem zurück gekoppelten Schaltsteuerdruck von Schaltventilen, welcher einen Istwert darstellt, abgeleiteten Regelabweichung prüft, ob die Regelabweichung einen Totbereich der Regeleinrichtung überschreitet, die eine erforderliche Stellgröße von Null ausgibt, wenn die Regelabweichung den Totbereich der Regeleinrichtung nicht überschreitet, und Regelabweichungen, die den Totbereich der Regeleinrichtung überschreiten, aufsummiert, bis ein vorbestimmter Schwellenwert überschritten wird, und sodann eine erforderliche Stellgröße ungleich Null zum Erzielen einer erforderlichen Druckänderung ausgibt;
eine Nichtlinearitäts-Kompensationseinrichtung zum Linearisieren der Regelstrecke in Abhängigkeit von der erforderlichen Druckänderung und einem Versorgungsdruck der Bremsanlage und Berechnen von zum Erzielen der erforderlichen Druckänderung erforderlichen Aktivierungszeiten der Schaltventile; und
eine Ventilsteuereinrichtung für jeweils jedes anzusteuernde Schaltventil zum Berechnen von tatsächlichen Ansteuerzeiten der Schaltventile unter Verwendung einer inversen Ansteuerkennlinie und Ausgeben der tatsächlichen Ansteuerzeiten an jeweilige Endstufen zur Erzeugung von Ansteuerimpulsen für jedes der einzelnen Schaltventile auf.

Bevorzugt ist dieses System derart ausgestaltet, dass die Regeleinrichtung bei großen Regelabweichungen schnell aktiviert wird und bei kleinen Regelabweichungen verlangsamt aktiviert wird.

Vorteilhaft umfasst das System ferner eine Temperatureffekt-Kompensationseinrichtung zur Kompensation thermodynamischer Effekte, der der Schaltsteuerdruck der Schaltventile zugeführt wird, die eine aufgrund der thermodynamischen Effekte zu erwartende Druckänderung berechnet, und die die zu erwartende Druckänderung als temperaturabhängige Stellgröße der Regeleinrichtung zuführt, wobei die Regeleinrichtung die temperaturabhängige Stellgröße von dem Sollwert und dem Totbereich der Regeleinrichtung derart subtrahiert, dass in Abhängigkeit von dem Vorzeichen der Stellgröße ein dynamischer Totbereich der Regeleinrichtung mit hystereseförmigem Verlauf resultiert, und im Einzelnen die Regeleinrichtung eine negative temperaturabhängige Stellgröße von dem Sollwert und einem unteren Grenzwert des Totbereichs derart subtrahiert, dass der über dem Sollwert liegende Teil des Totbereichs erweitert wird, und eine positive temperaturabhängige Stellgröße von dem Sollwert und einem oberen Grenzwert des Totbereichs derart subtrahiert, dass der unter dem Sollwert liegende Teil des Totbereichs erweitert wird.

Weiter vorteilhaft umfasst das System eine Adaptionseinrichtung, der die erforderliche Stellgröße der Regeleinrichtung und die von den Ventilsteuereinrichtungen berechneten tatsächlichen Ansteuerzeiten zugeführt werden, die Korrekturterme für die Nichtlinearitäts-Kompensationseinrichtung und die Ventilsteuereinrichtungen unter Berücksichtigung von tatsächlichen Parametern des realen Systems berechnet, und die die Korrekturterme an die Nichtlinearitäts-Kompensationseinrichtung und die Ventilsteuereinrichtungen ausgibt.

Bevorzugt ist die Regeleinrichtung ein proportionaler PID-Regler.

Die Erfindung wird nachstehend anhand eines bevorzugten Ausführungsbeispiels unter Bezugnahme auf die Zeichnung beschrieben. Es zeigen:
Fig. 1 eine vereinfachte Darstellung der Struktur eines zugrunde liegenden pneumatischen Bremsdruckregelung;
Fig. 2 ein Blockdiagramm einer für die in Fig. 1 gezeigte Struktur verwendeten Regelstrecke;
Fig. 3 ein Diagramm, das vereinfacht ein Temperaturmodell mit Hysterese zur Kompensation thermischer Effekte in der in Fig. 1 gezeigten Struktur darstellt;
Fig. 4 ein Messprotokoll für einen ersten Regelungsalgorithmus, das allgemein für einen sich sprungartig ändernden Druckverlauf erhaltene Ergebnisse zeigt;
Fig. 5 ein Messprotokoll für den ersten Regelungsalgorithmus, das einen Druckänderungsverlauf während einer typischen Fahrbetriebssituation eines Schienenfahrzeugs zeigt;
Fig. 6 ein Messprotokoll für einen zweiten Regelungsalgorithmus, das allgemein für einen sich sprungartig ändernden Druckverlauf erhaltene Ergebnisse zeigt; und
Fig. 7 ein Messprotokoll für den zweiten Regelungsalgorithmus, das einen Druckänderungsverlauf während einer typischen Fahrbetriebssituation eines Schienenfahrzeugs zeigt;

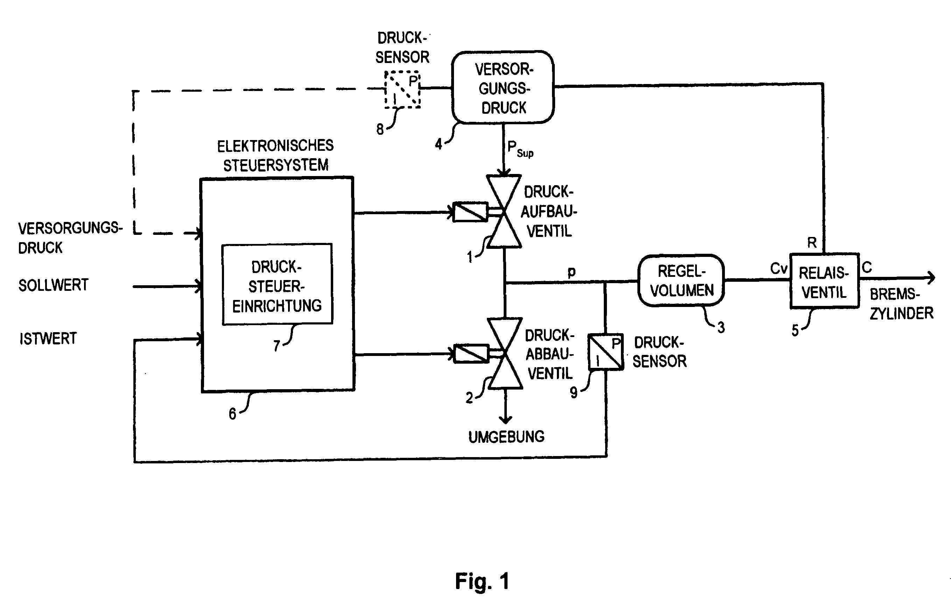

Fig. 1 zeigt eine vereinfachte Darstellung der Struktur einer zugrunde liegenden pneumatischen Bremsdruckregelung für eine elektropneumatische Bremse in einem Schienenfahrzeug, bei welcher Schaltventile, welche beispielsweise elektrische 2/2-Wege-Magnetventile sein können, in Form eines Druckaufbauventils bzw. Bremsmagnetventils 1 und eines Druckabbauventils bzw. Lösemagnetventils 2 zur Steuerung eines Regelvolumens 3, welches ein Vorsteuervolumen für ein Relaisventil 5 repräsentiert, durch Druckaufbau bzw. Druckabbau in diesem eingesetzt werden.

Für einen Druckaufbau in dem Regelvolumen 3 wird das Druckaufbauventil 1 über einen Versorgungsdruckbehälter 4 an seinem Druckeingang mit einem Versorgungsdruck Pₛᵤₚ belüftet und in den geöffneten Zustand geschaltet, so dass das Druckaufbauventil 1 an seinem Druckausgang entlüftet, über einen dadurch erzeugten Schaltsteuerdruck p den Druck in dem Regelvolumen 3 erhöht und somit zu einem höheren Bremsvorsteuerdruck Cv am Druckausgang des Regelvolumens führt. Im geöffneten Zustand des Druckaufbauventils 1 sperrt das Druckabbauventil 2.

Für einen Druckabbau in dem Regelvolumen 3 hingegen wird das Druckabbauventil 2 in den geöffneten Zustand geschaltet und sperrt das Druckaufbauventil 1, wodurch der an dem Druckeingang des Druckabbauventils 2 anliegende Schaltsteuerdruck p über den Druckausgang des Druckabbauventils 2 in die Umgebung entlüftet und der Druck in dem Regelvolumen 3 und somit auch der Bremsvorsteuerdruck Cv verringert wird.

Über das Regelvolumen 3 wird wiederum ein Druckeingang des Steuer- oder Relaisventils 5 mit dem aufgrund der Schaltvorgänge bzw. Schaltspiele der Druckaufbau- und Druckabbauventile 1, 2 über den Schaltsteuerdruck p erzeugten Bremsvorsteuerdruck Cv versorgt, welcher über die Verstärkungswirkung des Relaisventils 5 und einen dem Relaisventil 5 an einem weiteren Druckeingang desselben ebenfalls zugeführten Versorgungsdruck R an einem Druckausgang des Relaisventils 5 einen an einen (nicht gezeigten) Bremszylinder lieferbaren Bremsdruck C bereitstellt.

Das hierin vorgeschlagene Verfahren wird in einer Regelstrecke durchgeführt, die in dem linken Abschnitt der Fig. 1 in einem elektronischen Steuersystem 6 mit einer Drucksteuereinrichtung 7 angeordnet ist.

An Eingängen des elektronischen Steuersystems 6 liegen Eingangssignale für den Versorgungsdruck des Versorgungsdruckbehälters 4, ein Sollwert und ein Istwert an, und an Ausgängen der elektronischen Steuereinrichtung werden Ansteuersignale für das Druckaufbauventil 1 bzw. das Druckabbauventil 2 ausgegeben.

Wie in Fig. 1 dargestellt ist, werden hierzu der Versorgungsdruck des Versorgungsdruckbehälters 4 und der Schaltsteuerdruck p von Drucksensoren 8, 9 erfasst und in entsprechende elektrische Signale, beispielsweise Ströme, umgeformt, bevor sie der elektronischen Steuereinrichtung 6 zugeführt werden.

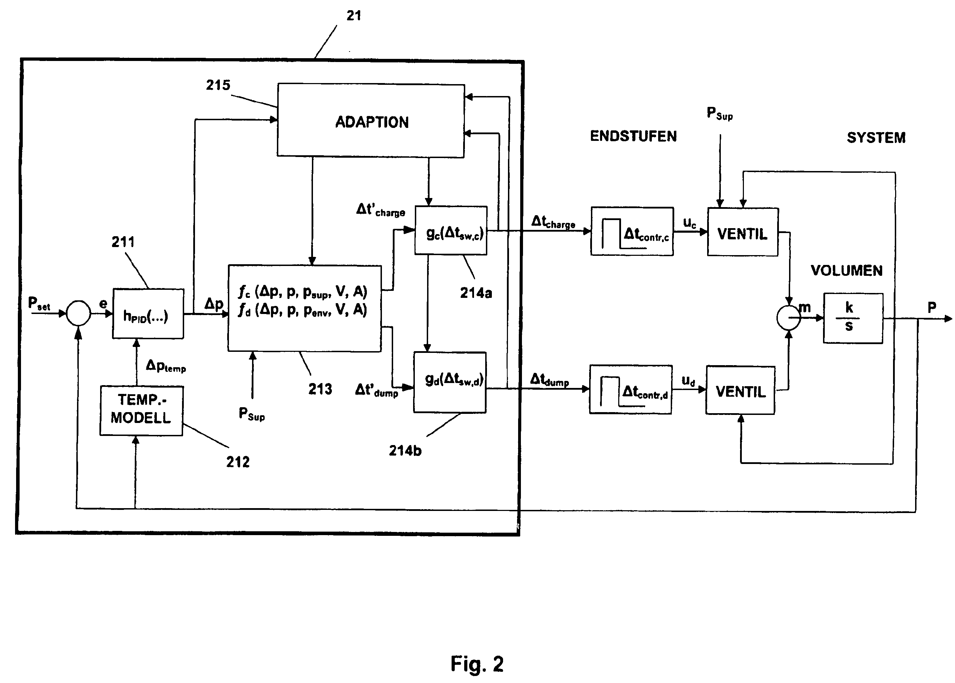

Fig. 2 zeigt ein Blockdiagramm einer Regelstrecke, welche sinnbildhaft die Elemente 1, 2, 4, 6, 7 und 9 der in Fig. 1 gezeigten Struktur einschließlich der Stellgröße bzw. des Sollwerts pₛₑₜ, wie er der elektronischen Steuereinrichtung 6 zugeführt wird, und dem dem zurück gekoppelten Schaltsteuerdruck p entsprechenden Istwert widerspiegelt. Eine der Differenz zwischen dem Sollwert und dem Istwert entsprechende Regelabweichung ist in Fig. 2 mit e bezeichnet.

Die in Fig. 2 außerhalb eines mit dem Bezugszeichen 21 bezeichneten Blocks gezeigten Elemente beziehen sich auf an sich bekannte Endstufen zur Impulserzeugung für die elektromagnetischen Druckaufbau- bzw. Druckabbauventile 1, 2, die Druckaufbau- und Druckabbauventile 1, 2 selbst und ein nachgeordnetes, den Schaltsteuerdruck p betreffendes Teilsystem. Diese Elemente werden daher nicht näher beschrieben.

Der Block 21 beinhaltet demgegenüber schematisch dargestellt die wesentlichen Merkmale des erfindungsgemäßen Verfahrens. Bei diesem Verfahren sind verschiedenartige Regelungsmechanismen in mehreren Stufen vorgesehen, welche einzeln oder in Kombination angewandt zu einer Reduzierung der im Betrieb der elektropneumatischen Bremsanlage auftretenden Schaltspiele der Druckaufbau- und Druckabbauventile 1, 2 und damit zu einem geringeren Verschleiß derselben führen. Nachstehend wird dies anhand eines dreistufigen Verfahrens beispielhaft näher beschrieben.

Zunächst berechnet in einer ersten Stufe ein an sich bekannter linearer Regler 211, zum Beispiel ein PID-Regler, mit einem Totbereich und einer Aktivierung über ein Fehlerintegral eine in einem nächsten Abtastschritt erforderliche Druckänderung Δp.

Hierzu wird in dem Regler 211 die der Differenz zwischen dem Sollwert pₛₑₜ und dem zurück gekoppelten Istwert entsprechende Regelabweichung e mit dem Totbereich, welcher ein Toleranzband bildet, des Reglers 211 verglichen. Falls die Regelabweichung e innerhalb dieses Toleranzbands liegt, wird eine Stellgröße von Null (△p = 0) ausgegeben. Mit anderen Worten führt der Totbereich des Reglers 211 bereits zu einer Verringerung der ausgeführten Schaltspiele der Schaltventile 1, 2, da der Regler 211 innerhalb seines Totbereichs an seinem Ausgang keine Stellgröße zur Druckänderung ausgibt.

Falls die Regelabweichung e außerhalb des Toleranzbands liegt, wird der Regler 211 innerhalb einer Reaktionszeit aktiviert. Die Reaktionszeit wird hierbei in Abhängigkeit von dem Ausmaß der Regelabweichung e gegenüber dem Toleranzband mittels einem Fehlerintegral, welches diese Abweichung aufsummiert, und einem vorbestimmten Schwellenwert bestimmt. Die Aktivierung des Reglers 211 erfolgt, wenn das Fehlerintegral den Schwellenwert überschreitet. Größere Regelabweichungen lassen das Fehlerintegral schneller den Schwellenwert überschreiten und führen demzufolge zu einer schnellen Aktivierung des Reglers 211, während kleinere Regelabweichungen das Fehlerintegral langsamer anwachsen lassen und somit eine relativ längere Zeit bis zur Aktivierung des Reglers 211 verstreicht, bei Überschreiten des Schwellenwerts jedoch dennoch unmittelbar eine entsprechend erforderliche (stärkere) Druckänderung Δp als Stellgröße ausgegeben wird.

Demgemäß führt die Aktivierung des Reglers 211 in Abhängigkeit von der Integration bzw. Aufsummierung einer auftretenden Regelabweichung bei kleineren Regelabweichungen selbst über das Toleranzband hinaus zu einer weiteren Verzögerung der Ausgabe einer Stellgröße ungleich Null, und wird die Anzahl nicht erforderlicher Schaltspiele der Schaltventile 1, 2 weiter deutlich reduziert, da bei dynamischen Sollwertänderungen eine gewollte Stufung erzeugt wird, ohne dass sich hierdurch Nachteile in Form von spürbaren Auswirkungen auf die Fahrzeugverzögerung, wie beispielsweise Rucke, ergeben. Andererseits sind in einem quasi-stationären Fall weiterhin sehr kleine Stufen und damit eine entsprechend hohe stationäre Genauigkeit möglich.

Fig. zeigt 3 ein Diagramm, das vereinfacht ein Temperaturmodell mit Hysterese zur Kompensation thermischer Effekte darstellt, welches in einer Modifikation der ersten Stufe gemäß dem Ausführungsbeispiel zusätzlich eingeführt werden kann.

Denn wird durch das Öffnen eines der beiden Schaltventile 1, 2 eine Druckänderung des Schaltsteuerdrucks p herbeigeführt, so reduziert sich die erzielte Druckänderung nach dem Schließen des betreffenden Schaltventils 1 bzw. 2 aufgrund von thermodynamischen Effekten in unerwünschter Weise wieder, so dass nachgeregelt werden muss, wodurch wiederum eine höhere Anzahl von Schaltspielen notwendig wird.

Um diese thermodynamischen Effekte zu kompensieren, wird der zurück gekoppelte Schaltsteuerdruck p, d.h. das diesem entsprechende elektrische Signal (der Istwert) wie durch den Drucksensor 9 in Fig. 1 erzeugt, einer ein Temperaturmodell bildenden und in die Regelstrecke eingefügten Temperatureffekt-Kompensationseinrichtung 212 in dem elektronischen Steuersystem 6 zugeführt, und berechnet die Temperatureffekt-Kompensationseinrichtung, welche Druckänderung Δpₜₑₘₚ aufgrund thermodynamischer Effekte nach dem Schließen des Schaltventils 1 bzw. 2 zu erwarten ist.

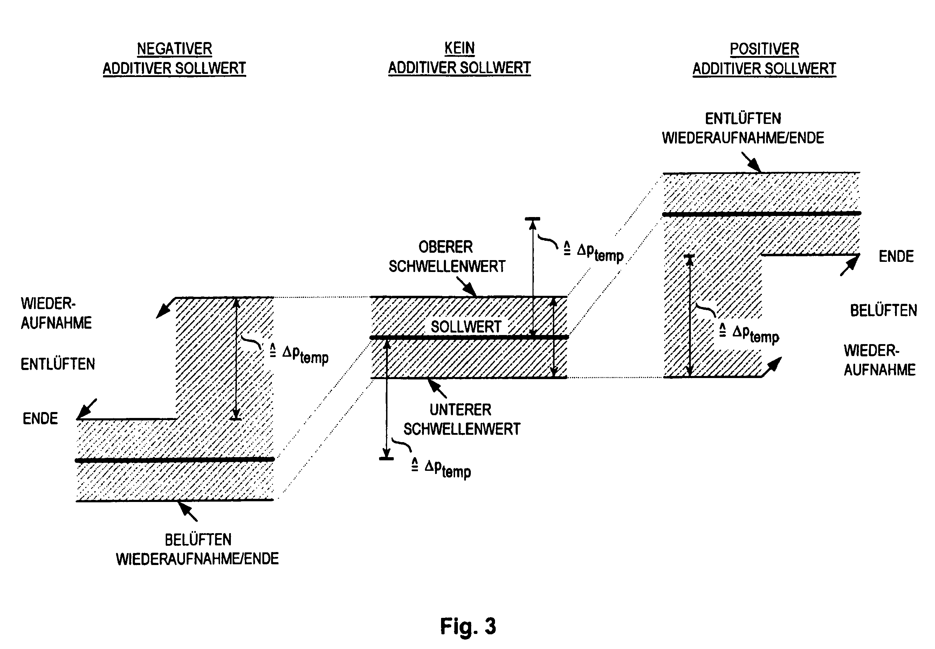

Diese zu erwartende Druckänderung △pₜₑₘₚ wird sodann als additiver bzw. im vorliegenden Fall subtraktiver Sollwert, der wie in Fig. 3 gezeigt negativ, null oder positiv sein kann, sowohl von dem Sollwert für den Regler 211 als auch von der Ausschaltschwelle seines Toleranzbands so subtrahiert, dass ein dynamischer Totbereich mit einer in Abhängigkeit von der berechneten Temperatureffektkompensation variierenden Hysterese resultiert.

Die zusätzliche Kompensation thermodynamischer Effekte führt zu einer Verringerung der Anzahl von Schaltspielen insbesondere bei sprungförmigen Sollwertänderungen, wobei idealerweise eine sprungförmige Sollwertänderung trotz des Vorhandenseins thermodynamischer Effekte mit nur einem Schaltvorgang erzielt werden kann. In der Praxis kann der subtraktive Sollwert begrenzt werden, um die Amplitude eines resultierenden Überschwingens der Druckänderung Δp zu beschränken. Jedoch wird auch bei rampenförmigen Sollwertänderungen die Anzahl der erforderlichen Schaltspiele verringert, und verbessert sich zusätzlich das Führungsverhalten aufgrund einer geringeren Nachlaufzeit.

Zu Fig. 2 zurückkehrend wird in einer zweiten Stufe des Verfahrens sodann von einer Nichtlinearitäts-Kompensationseinrichtung 213 ein inverses Streckenmodell zur Kompensation von Nichtlinearitäten eingeführt.

Die Nichtlinearitäts-Kompensationseinrichtung 213 bewirkt eine globale Linearisierung des durch die Bremsvordruckregelung gebildeten pneumatischen Untersystems und berechnet ausgehend von seiner Eingangsgröße Δp, d.h. der Ausgangsgröße des Reglers 211 (der gewünschten Druckänderung), in Abhängigkeit von der gewünschten Druckänderung Δp, dem Schaltsteuerdruck p, dem Versorgungsdruck Pₛᵤₚ bzw. dem Umgebungsdruck Pₑₙᵥ, einem Volumen V und einem Volumenstrom A eine Belüftungszeit Δt'_{charge} für das Druckaufbauventil 1 und eine Entlüftungszeit Δt'_{dump} für das Druckabbauventil 2, welche die für die erforderliche Druckänderung notwendigen Schaltzeiten dieser Ventile darstellen, als Ausgangsgrößen.

Für den Belüftungszweig ergibt sich Δt'_{charge} beispielsweise gemäß Δt'_{charge} = f_{c}(Δp, p, Pₛᵤₚ, V, A), und für den Entlüftungszweig Δt'_{dump} dem entsprechend gemäß Δt'_{dump} = _{d}(Δp,p, Pₑₙᵥ, V, A).

Aufgrund der Kompensation der Nichtlinearitäten verhält sich der resultierende Regelkreis für nicht zu große Regelabweichungen linear, so dass das Regelverhalten insoweit arbeitspunktunabhängig ist. Infolge dessen ist die bereitzustellende Stabilitätsreserve in dem gesamten Arbeitsbereich gleich und kann somit in dem genutzten Arbeitsbereich die Reglerverstärkung höher gewählt werden, wodurch bei gleicher Mindestansteuerung der Schaltventile 1, 2 höhere Genauigkeiten erzielbar sind.

Durch das arbeitspunktunabhängige Regelverhalten wird die Schalthäufigkeit insbesondere bei Entlüftungsvorgängen nochmals deutlich reduziert.

In einer dritten Stufe erfolgt schließlich die Berechnung erforderlicher tatsächlicher Ansteuerzeiten Δt_{charge} für das Druckaufbauventil 1 und Δt_{dump} für das Druckabbauventil 2 in Ventilsteuereinrichtungen 214a und 214b, welchen als Eingangssignale die von der Nichtlinearitäts-Kompensationseinrichtung 213 berechneten notwendigen Schaltzeiten Δt'_{charge} und Δt'_{dump} zugeführt werden.

Die Ventilsteuereinrichtungen 214a und 214b arbeiten hierbei mit einer inversen Ansteuerkennlinie, welche die für eine bestimmte gewünschte Schaltzeit der Druckaufbau- und Druckabbauventile 1, 2 notwendige elektrische Ansteuerzeit beschreibt. Allgemein resultieren die Ansteuerzeiten Δt_{charge} und Δt'_{dump} beispielsweise gemäß Δt_{charge} = g_{c} (Δt_{sw,c}) und Δt'_{dump} = g_{d} (Δt_{sw,d}).

Vorteile aus der Berechnung der erforderlichen tatsächlichen Ansteuerzeiten mittels einer inversen Ansteuerkennlinie zeigen sich in einem weiter weitgehend arbeitspunkt-unabhängigen Regelverhalten sowie in der Eigenschaft, dass auch kurze Impulse gezielt erzeugt werden können.

Als vorteilhafte Modifikation der zweiten und der dritten Stufe kann ferner eine Adaptionseinrichtung 215 vorgesehen sein, mittels welcher die Parameter der Regelstrecke denjenigen eines realen Systems (wie beispielsweise dessen Volumen und Ventil- bzw. Ansteuerkennlinie, Fertigungstoleranzen, Streuungen, Alterung usw.) angeglichen werden.

Der Adaptionseinrichtung 215 werden hierzu bei einer Ansteuerung der Schaltventile 1, 2 die gewünschte Druckänderung Δp aus dem Regler 211 und die von den Ventilsteuereinrichtungen 214a und 214b berechneten tatsächlichen Schaltzeiten Δt_{charge} und Δt_{dump} der Schaltventile 1, 2, d.h. die erfolgte Änderung, zugeführt und verglichen. Zeigt das Ergebnis dieses Vergleichs eine zu große Abweichung, berechnet die Adaptionseinrichtung geeignete Korrekturterme zur Aufhebung der Abweichung. Zeigen beispielsweise kurze Impulse nicht die gewünschte Wirkung, kann die Schaltschwelle der Ansteuerfunktion iterativ so lange zu längeren Impulsen hin modifiziert werden, bis die von dem Regler 211 geforderte Druckänderung erzielt wird.

Vorteile der Adaptionseinrichtung resultieren insbesondere in einem deutlich robusteren Regelverhalten und einer aufgrund der Kompensation von Toleranzen und Parameterschwankungen möglichen höheren Verstärkung und höheren Genauigkeit, welche wiederum zu einer nochmals weiter verringerten Anzahl erforderlicher Schaltspiele der Schaltventile 1, 2 führt.

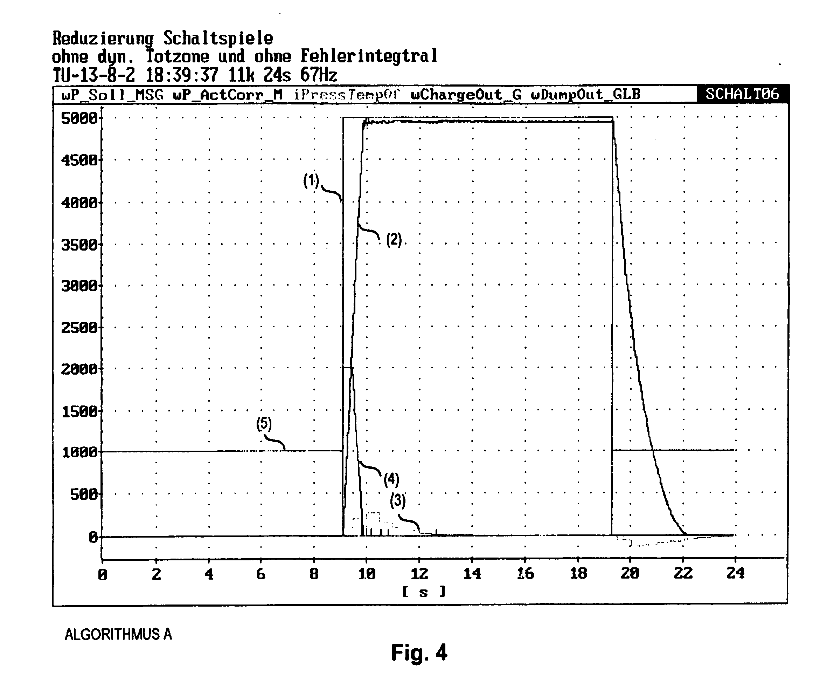

Die Fig. 4 bis 7 zeigen Messprotokolle von Messungen, die im Rahmen der vorgeschlagenen verschleißarmen Regelung durchgeführt wurden.

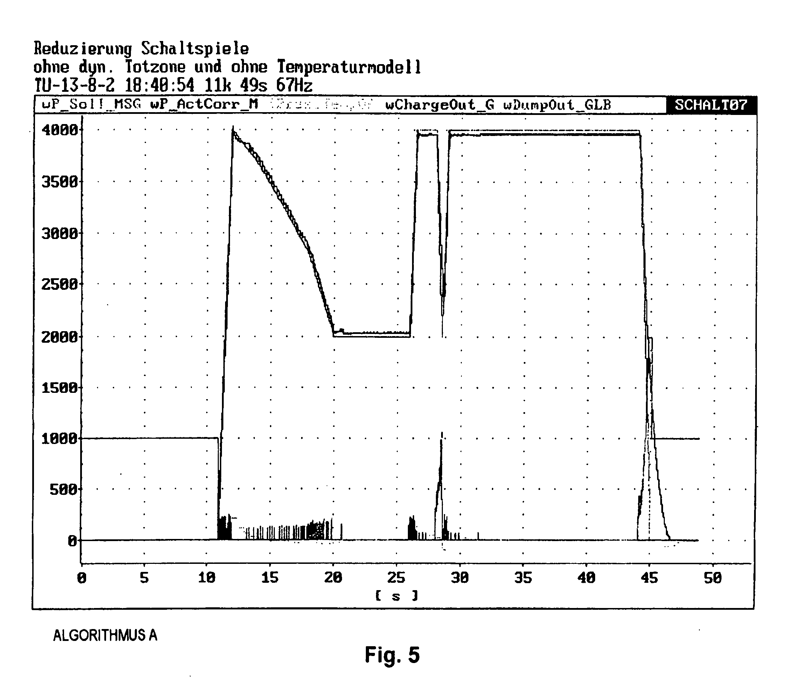

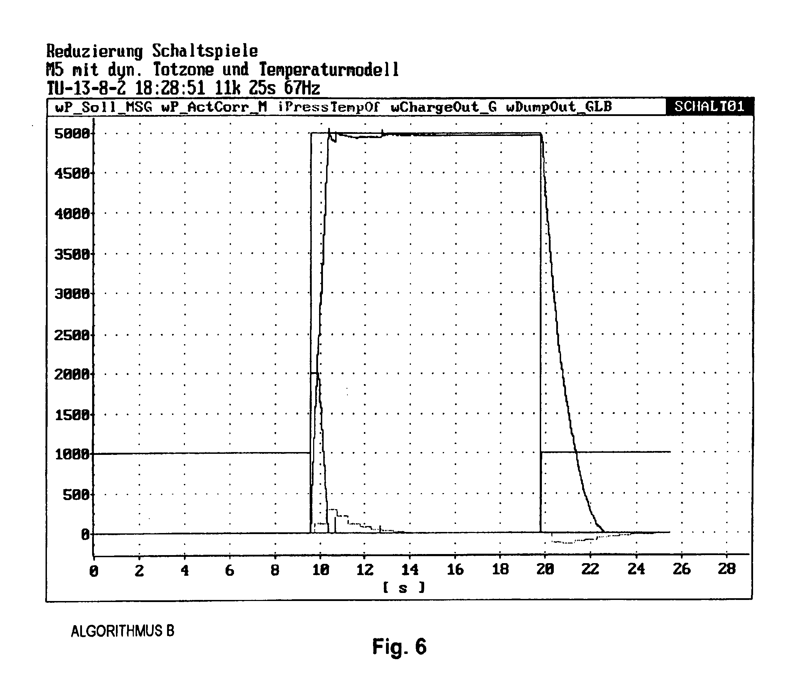

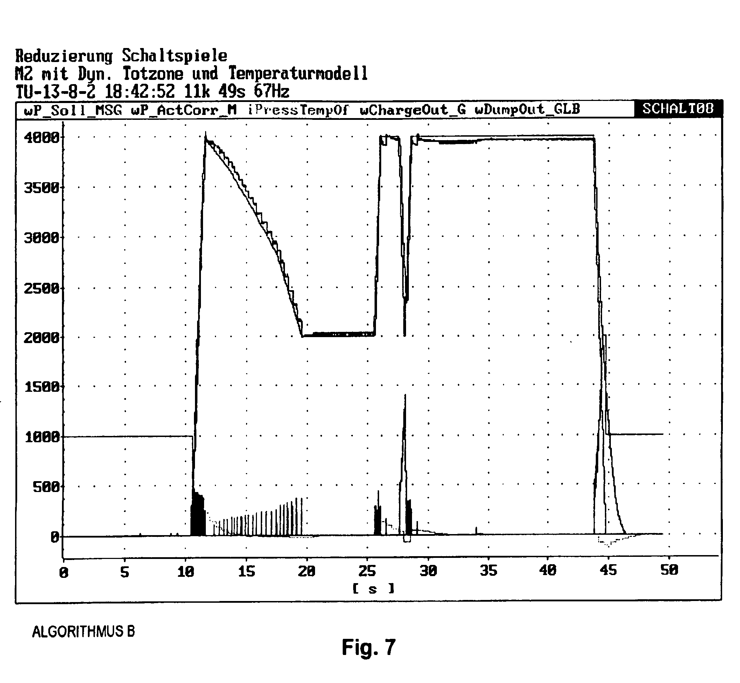

Beispielhaft wurden jeweils ein sprungförmiger Bremsvorsteuerdruck- bzw. Cv-Druckverlauf (Fig. 4 und 6) und ein Bremsvorsteuerdruck- bzw. Cv-Druckverlauf bei einem typischen Haltestellenzyklus einer U-Bahn (Fig. 5 und 7) nachgebildet.

Als Messgrößen sind jeweils der Solldruckwert wP_Soll_MSG in mbar (1), der Istdruckwert wP_ActCorr_M (2) in mbar (1x10² Pa), der Sollwertterm der Thermodynamikkompensation iPressTempOf in mbar (3), der Ansteuerimpuls wChargeOut_G für das Druckaufbau- bzw. Belüftungsventil 1 in 0.1 ms (4) und der Ansteuerimpuls wDumpOut_GLB für das Druckabbau- bzw. Entlüftungsventil 2 in 0.1 ms (5) angegeben.

Anhand dieser Messungen wurde die Schalthäufigkeit der Schaltventile 1, 2 zwischen den nachstehenden Regelalgorithmen A (Fig. 4 und 5) und B (Fig. 6 und 7) verglichen:
Algorithmus A: Linearisierte Regelstrecke, Proportionalregler, keine Adaption, statisches Toleranzband (d.h. kein dynamischer Totbereich), keine Berücksichtigung thermodynamischer Effekte; und
Algorithmus B: Linearisierte Regelstrecke, Proportionalregler, keine Adaption, Totbereich mit Aktivierung über Fehlerintegral, Temperaturmodell zur Berücksichtigung thermodynamischer Effekte.

Wie anhand eines Vergleichs der Fig. 4 und 6 ersichtlich ist, zeigen die Verläufe der ansteigenden und der abfallenden Flanke des dargestellten sprungförmigen Druckverlaufs keine signifikante Verringerung der Anzahl von Schaltspielen des Druckaufbauventils 1. Eine solche ist jedoch deutlich im Konstantbereich nach Erreichen des Betriebsdrucks zu erkennen und wird anhand eines Vergleichs der Fig. 5 und 7 nochmals deutlicher, der eine starke Reduzierung der Anzahl von Schaltspielen zusätzlich im Bereich der abfallenden Flanken des Bremsdruckverlaufs sowie in dessen Konstantbereich zeigt.

Erhaltene Messwerte sind in der nachfolgenden Tabelle in Beziehung zu einander gesetzt:

**Schaltspiele**

| | Sprung | Haltestellen-Zyklus |
|---|---|---|
| Algorithmus A | 8 | 64 |
| Algorithmus B | 3 | 22 |
| Reduktion der Schaltspielzahl um | ca. 60% | ca. 65% |

Durch die den Totbereich mit Aktivierung über Fehlerintegral und das Temperaturmodell berücksichtigenden Verarbeitungsschritte konnte die Schalthäufigkeit somit um mehr als 50% reduziert werden.

Bei einer Lebensdauer der Schaltventile von mindestens 50 x 10⁶ Schaltzyklen kann auf dieser Grundlage für beispielsweise eine U-Bahn mit dem in den Fig. 5 und 7 angenommenen Bremsvorsteuerdruck-Zyklus eine Lebensdauer von ca. 20 Jahren erwartet werden. Aufgrund von Undichtigkeiten kann sich diese Lebensdauer zwar verringern, da infolge dessen ein häufigeres Nachregeln erforderlich ist. Dennoch ist auch in diesem Fall mit einer Lebensdauer von deutlich über 10 Jahren zu rechnen.

### Bezugszeichenliste

- 1: Druckaufbauventil
- 2: Druckabbauventil
- 3: Regelvolumen
- 4: Versorgungsdruck
- 5: Relaisventil
- 6: Elektronisches Steuersystem
- 7: Drucksteuereinrichtung
- 8: Drucksensor
- 9: Drucksensor
- 21: Block
- 211: Regeleinrichtung
- 212: Temperatureffekt-Kompensationseinrichtung
- 213: Nichtlineraritäts-Kompensationseinrichtung
- 214a: Ventilsteuereinrichtung
- 214b: Ventilsteuereinrichtung
- 215: Adaptionseinrichtung

## Patentansprüche

1. Verfahren zur Bremsdruckregelung in einer mit Schaltventilen arbeitenden elektropneumatischen Bremsanlage, **gekennzeichnet durch** die Schritte:
Prüfen, ob eine Regelabweichung (e) zwischen einem Sollwert (pₛₑₜ) und einem zurück gekoppelten Schaltsteuerdruck (p) von Schaltventilen (1, 2), welcher einen Istwert darstellt, einen um diesen Sollwert liegenden Totbereich einer Regeleinrichtung (211) überschreitet;
Ausgeben einer erforderlichen Stellgröße von Null, wenn die Regelabweichung den Totbereich der Regeleinrichtung (211) nicht überschreitet;
Aufsummieren von Regelabweichungen, die den Totbereich der Regeleinrichtung (211) überschreiten, bis ein vorbestimmter Schwellenwert überschritten wird, und sodann Ausgeben einer erforderlichen Stellgröße ungleich Null zum Erzielen einer erforderlichen Druckänderung (Δp);
Berechnen von zum Erzielen der erforderlichen Druckänderung (Δp) erforderlichen Aktivierungszeiten (Δt'_{charge}, Δt'_{dump}) der Schaltventile (1, 2) mittels einer Nichtlinearitäts-Kompensationseinrichtung (213) zur Linearisierung der Regelstrecke in Abhängigkeit von der erforderlichen Druckänderung (Δp) und einem Versorgungsdruck (Pₛᵤₚ) der Bremsanlage;
Berechnen von tatsächlichen Ansteuerzeiten (At_{charge}, Δt_{dump}) der Schaltventile (1, 2) mittels einer Ventilsteuereinrichtung (214a, 214b) für jeweils jedes anzusteuernde Schaltventil (1, 2) unter Verwendung einer inversen Ansteuerkennlinie; und
Ausgeben der tatsächlichen Ansteuerzeiten (Δt_{charge}, Δt_{dump}) an jeweilige Endstufen zur Erzeugung von Ansteuerimpulsen für jedes der einzelnen Schaltventile (1, 2).

2. Verfahren nach Anspruch 1, **dadurch gekennzeichnet, dass** in Abhängigkeit von dem Aufsummierschritt die Regeleinrichtung (211) bei großen Regelabweichungen schnell aktiviert wird und bei kleinen Regelabweichungen verlangsamt aktiviert wird.

3. Verfahren nach Anspruch 1, **gekennzeichnet durch** die Schritte:
Zuführen des Schaltsteuerdrucks (p) der Schaltventile (1, 2) zu einer Temperatureffekt-Kompensationseinrichtung (212) zur Kompensation thermodynamischer Effekte;
Berechnen einer aufgrund der thermodynamischen Effekte zu erwartenden Druckänderung; und
Zuführen der zu erwartenden Druckänderung als temperaturabhängige Stellgröße (Δpₜₑₘₚ) zu der Regeleinrichtung (211).

4. Verfahren nach Anspruch 3, **gekennzeichnet durch** den Schritt:
Subtrahieren der temperaturabhängigen Stellgröße (Δpₜₑₘₚ) von dem Sollwert (pₛₑₜ) und dem Totbereich der Regeleinrichtung (211) derart, dass in Abhängigkeit von dem Vorzeichen der Stellgröße (Δpₜₑₘ) ein dynamischer Totbereich der Regeleinrichtung (211) mit hystereseförmigem Verlauf resultiert.

5. Verfahren nach Anspruch 4, **gekennzeichnet durch** den Schritt:
Subtrahieren einer negativen temperaturabhängigen Stellgröße (Δpₜₑₘₚ) von dem Sollwert (pₛₑₜ) und einem unteren Grenzwert des Totbereichs derart, dass der über dem Sollwert liegende Teil des Totbereichs erweitert wird, und Subtrahieren positiven temperaturabhängigen Stellgröße (Δ_{Ptemp}) von dem Sollwert (pₛₑₜ) und einem oberen Grenzwert des Totbereichs derart, dass der unter dem Sollwert liegende Teil des Totbereichs erweitert wird.

6. Verfahren nach einem der vorangehenden Ansprüche 1 bis 5, **gekennzeichnet durch** die Schritte:
Zuführen der erforderlichen Stellgröße (Δp) der Regeleinrichtung (211) und der von den Ventilsteuereinrichtungen (214a, 214b) berechneten tatsächlichen Ansteuerzeiten (Δt_{charge}, Δt_{dump}) zu einer Adaptionseinrichtung (215);
Berechnen von Korrekturtermen für die Nichtlinearitäts-Kompensationseinrichtung (213) und die Ventilsteuereinrichtungen (214a, 214b) unter Berücksichtigung von tatsächlichen Parametern des realen Systems; und
Ausgeben der Korrekturterme an die Nichtlinearitäts-Kompensationseinrichtung (213) und die Ventilsteuereinrichtungen (214a, 214b).

7. Verfahren nach einem der vorangehenden Ansprüche 1 bis 6, **dadurch gekennzeichnet, dass** als die Regeleinrichtung (211) ein proportionaler PID-Regler verwendet wird.

8. System zur Bremsdruckregelung in einer mit Schaltventilen arbeitenden elektropneumatischen Bremsanlage, **gekennzeichnet durch**:
eine Regeleinrichtung (211), die auf der Grundlage einer aus einem Sollwert (pₛₑₜ) und einem zurück gekoppelten Schaltsteuerdruck (p) von Schaltventilen (1, 2), welcher einen Istwert darstellt, abgeleiteten Regelabweichung (e) prüft, ob die Regelabweichung einen Totbereich der Regeleinrichtung überschreitet, die eine erforderliche Stellgröße von Null ausgibt, wenn die Regelabweichung den Totbereich der Regeleinrichtung (211) nicht überschreitet, und Regelabweichungen, die den Totbereich der Regeleinrichtung (211) überschreiten, aufsummiert, bis ein vorbestimmter Schwellenwert überschritten wird, und sodann eine erforderliche Stellgröße ungleich Null zum Erzielen einer erforderlichen Druckänderung (Δp) ausgibt;
eine Nichtlinearitäts-Kompensationseinrichtung (213) zum Linearisieren der Regelstrecke in Abhängigkeit von der erforderlichen Druckänderung (Δp) und einem Versorgungsdruck (Pₛᵤₚ) der Bremsanlage und Berechnen von zum Erzielen der erforderlichen Druckänderung (Δp) erforderlichen Aktivierungszeiten (Δt'_{charge}, Δt'_{dump}) der Schaltventile (1, 2); und
eine Ventilsteuereinrichtung (214a, 214b) für jeweils jedes anzusteuernde Schaltventil (1, 2) zum Berechnen von tatsächlichen Ansteuerzeiten (Δt_{charge} Δt_{dump}) der Schaltventile (1, 2) unter Verwendung einer inversen Ansteuerkennlinie und Ausgeben der tatsächlichen Ansteuerzeiten (Δt_{charge}, Δt_{dump}) an jeweilige Endstufen zur Erzeugung von Ansteuerimpulsen für jedes der einzelnen Schaltventile (1, 2).

9. System nach Anspruch 8, **dadurch gekennzeichnet, dass** die Regeleinrichtung (211) bei großen Regelabweichungen schnell aktiviert wird und bei kleinen Regelabweichungen verlangsamt aktiviert wird.

10. System nach Anspruch 8, **gekennzeichnet durch** eine Temperatureffekt-Kompensationseinrichtung (212) zur Kompensation thermodynamischer Effekte, der der Schaltsteuerdruck (p) der Schaltventile (1, 2) zugeführt wird, die eine aufgrund der thermodynamischen Effekte zu erwartende Druckänderung berechnet, und die die zu erwartende Druckänderung als temperaturabhängige Stellgröße (Δpₜₑₘₚ) der Regeleinrichtung (211) zuführt.

11. System nach Anspruch 10, **dadurch gekennzeichnet, dass** die Regeleinrichtung (211) die temperaturabhängige Stellgröße (Δpₜₑₘₚ) von dem Sollwert (pₛₑₜ) und dem Totbereich der Regeleinrichtung (211) derart subtrahiert, dass in Abhängigkeit von dem Vorzeichen der Stellgröße (Δpₜₑₘₚ) ein dynamischer Totbereich der Regeleinrichtung (211) mit hystereseförmigem Verlauf resultiert.

12. System nach Anspruch 11, **dadurch gekennzeichnet, dass** die Regeleinrichtung (211) eine negative temperaturabhängige Stellgröße (Δpₜₑₘₚ) von dem Sollwert (pₛₑₜ) und einem unteren Grenzwert des Totbereichs derart subtrahiert, dass der über dem Sollwert liegende Teil des Totbereichs erweitert wird, und eine positive temperaturabhängige Stellgröße (Δpₜₑₘₚ) von dem Sollwert (pₛₑₜ) und einem oberen Grenzwert des Totbereichs derart subtrahiert, dass der unter dem Sollwert liegende Teil des Totbereichs erweitert wird.

13. System nach einem der vorangehenden Ansprüche 8 bis 12, **gekennzeichnet durch** eine Adaptionseinrichtung (215), der die erforderliche Stellgröße (Δp) der Regeleinrichtung (211) und die von den Ventilsteuereinrichtungen (214a, 214b) berechneten tatsächlichen Ansteuerzeiten (Δt_{charge}, Δt_{dump}) zugeführt werden, die Korrekturterme für die Nichtlinearitäts-Kompensationseinrichtung (213) und die Ventilsteuereinrichtungen (214a, 214b) unter Berücksichtigung von tatsächlichen Parametern des realen Systems berechnet, und die die Korrekturterme an die Nichtlinearitäts-Kompensationseinrichtung (213) und die Ventilsteuereinrichtungen (214a, 214b) ausgibt.

14. System nach einem der vorangehenden Ansprüche 8 bis 13, **dadurch gekennzeichnet, dass** die Regeleinrichtung (211) ein proportionaler PID-Regler ist.

## Claims

1. Method for brake pressure control in an electropneumatic brake assembly operating with switching valves, **characterised by the following steps:**
checking if a control deviation (e) between a nominal value (pₛₑₜ) and a switching control pressure (p) fed back from switching valves (1, 2) which shows an actual value, exceeds a dead range around this nominal value of a control device; issuing a necessary actuating variable of zero, if the control deviation does not exceed the dead range of the control device (211);
summing control deviations exceeding the dead range of the control device (211), until a predetermined threshold is exceeded, and then issuing a necessary actual variable unequal to zero for achieving a necessary pressure change (Δp); calculating the necessary activation times (Δt'_{charge}, Δt'_{dump}) for achieving the necessary pressure change (Δp) of the switching valves (1, 2) by means of a non-linearity compensation device (213) for the linearisation of the control path in dependence on the necessary pressure change (Δp) and a supply pressure (pₛᵤₚ) of the brake assembly;
calculating actual activation times (Δt_{change}, Δt_{dump}) of the switching valves (1,2) by means of a valve control device (214a, 214b) for respectively each switching valve (1, 2) to be actuated while using an inverse actuation characteristic; and
issuing the actual activation times (Δt_{change}, Δt_{dump}) to respective output stages for generating actuating impulses for each of the individual switching valves (1, 2).

2. Method according to claim 1, **characterised in that**, in dependence on the summing step, the control device (211) is activated quickly with large control deviations, and is activated in a decelerated manner with small control deviations.

3. Method according to claim 1, **characterised by** the following steps:
supplying the switching control pressure (p) of the switching valves (1, 2) to a temperature effect compensation device (212) for compensating thermodynamic effects;
calculating a pressure change to be expected due to the thermodynamic effects; and
supplying the pressure change to be expected as temperature-dependent actuating variable (Δpₜₑₘₚ) to the control device (211).

4. Method according to claim 3, **characterised by** the following step:
substracting the temperature-dependent actuating variable (Δpₜₑₘₚ) from the nominal value (pₛₑₜ) and the dead range of the control device (211) in such a manner that a dynamic dead range of the control device (211) with a progress in hysteresis form results in dependence on the prefix of the actuating variable (Δpₜₑₘₚ).

5. Method according to claim 4, **characterised by** the following step:
substracting a negative temperature-dependent actuating variable (Δpₜₑₘₚ) from the nominal value (pₛₑₜ) and a lower limit value of the dead range in such a manner that the part of the dead range above the nominal value is expanded, and
substracting a positive temperature-dependent actuating variable (Δpₜₑₘₚ) from the nominal value (pₛₑₜ) and an upper limit value of the dead range in such a manner that the part of the dead range below the nominal value is expanded.

6. Method according to one of the preceding claims 1 to 5, **characterised by** the following steps:
supplying the necessary actuating variable (Δp) of the control device (211) and the actual actuation times (Δt_{change}, Δt_{dump}) calculated by the valve control devices (214a, 214b) to an adaptation device (215);
calculating correction terms for the non-linearity compensation device (213) and the valve control devices (214a, 214b) while considering actual parameters of the real system; and
issuing the correction terms to the non-linearity compensation device (213) and the valve control devices (214a, 214b).

7. Method according to one of the preceding claims 1 to 6, **characterised in that** a proportional PID controller is used as control device (211).

8. System for brake pressure control in an electropneumatic braking system operating with switching valves, **characterised by:**
a control device (211) which checks on the basis of a control deviation (e) derived from a nominal value (pₛₑₜ) and a switching control pressure (p) fed back from switching valves (1, 2) if the control deviation exceeds a dead range of the control device, which issues a necessary actuating variable of zero if the control deviation does not exceed the dead range of the control device (211), and sums control deviations exceeding the dead region of the control device (211), until a predetermined threshold is exceeded, and then issues an actual variable unequal to zero for achieving a necessary pressure change (Δp);
a non-linearity compensation device (213) for the linearisation of the control path in dependence on the necessary pressure change (Δp) and a supply pressure (pₛᵤₚ) of the brake assembly and calculating the necessary activation times (Δt_{change}, Δt_{dump}) of the switching valves (1, 2) for achieving the necessary pressure change (Δp), and
a valve control device (214a, 214b) for respectively each switching valve (1, 2) to be actuated for calculating actual activation times (Δt_{change}, Δt_{dump}) of the switching valves (1, 2) while using an inverse actuation characteristic, and issuing the actual activation times (Δt_{change}, Δt_{dump}) to respective output stages for generating actuating impulses for each of the individual switching valves (1, 2).

9. System according to claim 8, **characterised in that** the control device (211) is activated quickly with large control deviations, and is activated in a decelerated manner with small control deviations.

10. System according to claim 8, **characterised by** a temperature effect compensation device (212) for the compensation of thermodynamic effects, to which is supplied to the switching control pressure (p) of the switching valves (1, 2), which calculates a pressure change to be expected due to the thermodynamic effects, and which supplies the pressure change to be expected as temperature-dependent actuating variable (Δpₜₑₘₚ) to the control device (211).

11. System according to claim 10, **characterised in that** the control device (211) subtracts the temperature-dependent actuating variable (Δpₜₑₘₚ) from the nominal value (pₛₑₜ) and the dead range of the control device (211) in such a manner, that a dynamic dead range of the control device (211) with a progress in the form of a hysteresis results in dependence on the prefix of the actuating variable (Δpₜₑₘₚ).

12. System according to claim 11, **characterised in that** the control device (211) subtracts a negative temperature-dependent actuating variable (Δpₜₑₘₚ) from the nominal value (pₛₑₜ) and a lower limit value of the dead range in such a manner that the part of the dead range above the nominal value is expanded, and subtracts a positive temperature-dependent actuating variable (Δpₜₑₘₚ) from the nominal value (pₛₑₜ) and an upper limit value of the dead range in such a manner that the part of the dead range below the nominal value of the dead range is expanded.

13. System according to one of the preceding claims 8 to 12, **characterised by** an adaptation device (215), to which are supplied the necessary actuating variable (Δp) of the control device (211) and the actual activation times (Δt_{charge},Δt_{dump}) calculated by the valve control devices (214a, 214b), which calculates the correction terms for the non-linearity compensation device (213) and the valve control devices (214a, 214b) while considering actual parameters of the real system, and which issues the correction terms to the non-linearity compensation device (213) and the valve control devices (214a, 214b).

14. System according to one of the preceding claims 8 to 13, **characterised in that** the control device (211) is a proportional PID controller.

## Revendications

1. Procédé de réglage de la pression des freins dans une installation de freinage électropneumatique fonctionnant avec des vannes de réglage, **caractérisé par** les stades dans lesquels :
on contrôle si un écart (e) de réglage entre une valeur (pₛₑₜ) de consigne et une pression (p) de commande rétrocouplée de vannes (1, 2) de commande, qui représente une valeur réelle, dépasse une plage morte, se trouvant autour de cette valeur de consigne, d'un dispositif (211) de réglage ;
on émet une grandeur réglante nécessaire de zéro, lorsque l'écart de réglage ne dépasse pas la plage morte du dispositif (211) de réglage ;
on fait la somme d'écarts de réglage, qui dépassent la plage morte du dispositif (211) de réglage, jusqu'à ce qu'une valeur de seuil déterminée à l'avance soit dépassée et on émet immédiatement une grandeur réglante nécessaire, différente de zéro, pour obtenir une variation (Δp) nécessaire de la pression ;
on calcule des temps (Δt' _{charge}, Δt'_{dump}) d'activation nécessaires pour obtenir la variation (Δp) nécessaire de pression des vannes (1, 2) de commande au moyen d'un dispositif (213) de compensation de la non linéarité pour linéariser le système de réglage en fonction de la variation (Δp) nécessaire de pression et d'une pression (Pₛᵤₚ) d'alimentation de l'installation de freinage ;
on calcule des temps (Δt' _{charge}, Δt' _{dump}) réels de commande des vannes (1, 2) de commande au moyen d'un dispositif (214a, 214b) de commande des vannes pour chaque vanne (1, 2) de commande à commander en utilisant une courbe caractéristique de commande inverse ; et
on émet les temps (Δt'_{charger} Δt'_{dump}) de commande réels à chaque étage d'extrémité pour la production d'impulsions de commande pour chacune des vannes (1, 2) individuelles de commande .

2. Procédé suivant la revendication 1, **caractérisé en ce que** en fonction du stade de sommation, on active rapidement, si les écarts de réglage sont grands, le dispositif (211) de réglage, et, si les écarts de réglage sont petits, on l'active d'une manière ralentie.

3. Procédé suivant la revendication 1, **caractérisé par** le stade dans lequel :
on envoie la pression (p) de commande des vannes (1, 2) de commande à un dispositif (212) de compensation de l'effet de la température pour la compensation d'effets thermodynamiques ;
on calcule une variation de pression, à laquelle on s'attend en raison des effets thermodynamiques ; et
on envoie la variation de pression, à laquelle on s'attend, en tant que grandeur (Δpₜₑₘₚₛ) réglante dépendant de la température au dispositif (211) de réglage.

4. Procédé suivant la revendication 3, **caractérisé par** le stade dans lequel :
on soustrait la grandeur (Δpₜₑₘₚₛ) réglante qui dépend de la température, de la valeur (pₛₑₜ) de consigne et de la plage morte du dispositif (211) de réglage de façon à obtenir, en fonction du signe de la grandeur (Δpₜₑₘₚₛ) réglante, une plage morte dynamique du dispositif (211) de réglage ayant un tracé en forme d'hystérésis.

5. Procédé suivant la revendication 4, **caractérisé par** le stade dans lequel :
on soustrait une grandeur (Δptₑₘₚₛ) de réglage négative, qui dépend de la température, de la valeur (pₛₑₜ) de consigne et d'une valeur limite inférieure de la plage morte de manière à étendre la partie de la plage morte se trouvant au dessus de la valeur de consigne et on soustrait des grandeurs (Δpₜₑₘₚₛ) réglantes positives, qui dépendent de la température, de la valeur (pₛₑₜ) de consigne et d'une valeur limite supérieure de la plage morte de façon à étendre la partie de la plage morte se trouvent en dessous de la valeur de la consigne.

6. Procédé suivant l'une des revendications précédentes 1 à 5, **caractérisé par** les stades dans lesquels :
on envoie au dispositif (211) de réglage, la grandeur (Δp) réglante nécessaire, et à un dispositif (215) d'adaptation les temps (Δt' _{charge}, Δt' _{dump}) de commande réels calculés par les dispositifs (214a, 214b) de commande de vannes ;
on calcule des termes de correction pour le dispositif (213) de compensation de la non linéarité et pour les dispositifs (214a, 214b) de commande de vannes, en tenant compte de paramètres réels du système réel ; et
on envoie les termes de correction au dispositif (213) de compensation de la non linéarité et aux dispositifs (214a, 214b) de commande de vannes.

7. Procédé suivant l'une des revendications précédentes 1 à 6, **caractérisé en ce que** l'on utilise comme dispositif (211) de réglage un régleur PID proportionnel.

8. Système de réglage de la pression des freins dans une installation de freinage électropneumatique fonctionnant avec des vannes de commande, **caractérisé par** :
un dispositif (211) de réglage qui, sur la base d'un écart (e) de réglage dérivé d'une valeur (pₛₑₜ) de consigne et d'une pression (p) de commande rétrocouplée de vannes (1, 2) de commande, qui représente une valeur réelle, contrôle si l'écart de réglage dépasse une plage morte du dispositif de réglage, qui émet une grandeur réglante nécessaire de zéro, si l'écart de réglage ne dépasse pas la plage morte du dispositif (211) de réglage et qui somme des écarts de réglage, qui dépassent la plage morte du dispositif (211) de réglage, jusqu'à ce qu'une valeur de seuil déterminée soit dépassée et émet ensuite une grandeur réglante nécessaire différente de zéro pour obtenir une variation (Δp) nécessaire de la pression ;
un dispositif (213) de compensation de la non linéarité pour linéariser le système de réglage en fonction de la variation (Δp) nécessaire de pression et d'une pression (Pₛᵤₚ) d'alimentation de l'installation de freinage et pour calculer des temps (Δt'_{charge}, Δt'_{dump}) d'activation des vannes (1, 2) de commande nécessaires pour produire la variation (Δp) nécessaire de la pression ; et
un dispositif (214a, 214b) de commande de chaque vanne (1, 2) de commande à commander pour calculer des temps (Δt' _{charge'} Δt' _{dump}**)** de commande réels des vannes (1, 2) de commande, en utilisant une courbe caractéristique de commande inverse, et pour envoyer les temps (Δt' _{charge}, Δt' _{dump}) de commande réels aux étages finaux respectifs de la production d'impulsions de commande pour chacune des vannes (1, 2) individuelles de commande.

9. Système suivant la revendication 8, **caractérisé en ce que** le dispositif (211) de réglage est activé rapidement si les écarts de réglage sont grands et est activé de manière ralentie si les écarts de réglage sont petits.

10. Système suivant la revendication 8, **caractérisé par** un dispositif (212) de compensation de l'effet de la température pour la compensation des effets thermodynamiques, auquel la pression (p) de commande des vannes (1, 2) de commande est envoyée, qui calcule une variation de pression à laquelle on s'attend en raison des effets thermodynamiques et qui envoie au dispositif (211) de réglage la variation de pression à laquelle on s'attend en tant que grandeur (Δpₜₑₘₚₛ) réglante qui dépend de la température.

11. Système suivant la revendication 10, **caractérisé en ce que** le dispositif (211) de réglage soustrait la grandeur (Δpₜₑₘₚₛ) réglante, qui dépend de la température, de la valeur (pₛₑₜ) de consigne et de la plage morte du dispositif (211) de réglage de façon à obtenir, en fonction du signe de la grandeur (Δpₜₑₘₚₛ) réglante, une plage morte dynamique du dispositif (211) de réglage ayant un tracé en forme d'hystérésis.

12. Système suivant la revendication 11, **caractérisé en ce que** le dispositif (211) de réglage soustrait une grandeur (Δpₜₑₘₚₛ) réglante négative, qui dépend de la température, de la valeur (pₛₑₜ) de consigne et d'une valeur limite inférieure de la plage morte de façon à étendre la partie de la plage morte se trouvant au-dessus de la valeur de consigne et une valeur (Δpₜₑₘₚₛ) réglante positive, qui dépend de la température, de la valeur (pₛₑₜ) de consigne et d'une valeur supérieure de la plage morte de façon à étendre la partie de la plage morte se trouvant en dessous de la valeur de consigne.

13. Système suivant l'une des revendications précédentes 8 à 12, **caractérisé par** un dispositif (215) d'adaptation, auquel sont envoyées les grandeurs (Δp) réglantes nécessaires du dispositif (211) de réglage et les temps (Δt'_{charge}, Δt'_{dump}) de commande réels calculés par les dispositifs (214a, 214b) de commande de vannes et qui calcule des termes de correction pour le dispositif (213) de compensation de la non linéarité et les dispositifs (214a, 214b) de commande de vannes, en tenant compte de paramètres réels du système réel et qui envoie les termes de correction au dispositif (213) de compensation de la non linéarité et aux dispositifs (214a, 214b) de commande de vannes.

14. Système suivant l'une des revendications précédentes 8 à 13, **caractérisé en ce que** le dispositif (211) de réglage est un régleur PID proportionnel.
